# EUROPÄISCHE PATENTSCHRIFT

(11) **EP 3 657 030 B1**
(45) Veröffentlichungstag und Bekanntmachung des Hinweises auf die Patenterteilung: **10.04.2024**
(21) Anmeldenummer: 19211360.3
(22) Anmeldetag: 25.11.2019
(51) Int. Cl.: F16B 5/01, F16B 12/24, F16B 12/20, F16B 5/00, F16B 13/02, F16B 13/12, F16B 5/06, F16B 12/14

(54) **LEICHTBAUDÜBEL UND VERBINDUNGSBESCHLAG**
LIGHTWEIGHT DOWEL AND CONNECTION FITTING
GOUJON LÉGER ET FERRURE D'ASSEMBLAGE

(30) Priorität: 23.11.2018 DE 102018129636; 23.11.2018 DE 102018129632; 09.07.2019 DE 102019118517
(43) Veröffentlichungstag der Anmeldung: 27.05.2020
(73) Patentinhaber: Dethleffs GmbH & Co. KG, 88316 Isny (DE)
(72) Erfinder: Schonhardt, Tobias, 88316 Isny (DE)
(74) Vertreter: Müller Schupfner & Partner Patent- und Rechtsanwaltspartnerschaft mbB

(56) Entgegenhaltungen:
- EP-A2- 0 400 388
- DE-A1-102007 020 619
- DE-A1-102013 104 661
- DE-A1-102016 202 450
- DE-U1-202008 013 611
- FR-A1- 2 657 925
- US-A- 4 089 614

## Beschreibung

Die Erfindung betrifft einen Leichtbaudübel, eine erste Baugruppe zur Herstellung eines Möbels, einen Verbindungsbeschlag, eine zweite Baugruppe zur Herstellung eines Möbels sowie einen Bausatz zur Herstellung eines Möbels gemäß dem Oberbegriff des Anspruchs 1 bzw. 4 bzw. 6 bzw. 8 bzw. 10.

Aus der DE 24 52 398 A1 ist ein Dübel bekannt, welcher zwei Spreizflügel und einen Spreizflügelsockel umfasst.

Aus der DE 10 2016 202 450 A1 ist ein Topfbeschlag bekannt, welcher einen Grundkörper und einen Hals umfasst, wobei der mit einer umlaufenden Seitenwandung des Grundkörpers verbunden ist und wobei der Topfbeschlag einen sich zu einer Oberseite des Grundkörpers öffnenden, wannenartigen Aufnahmeraum umfasst und wobei der Topfbeschlag einen Kanal umfasst, welcher von einem stirnseitigen Ende des Halses in den Aufnahmeraum führt.

Aus der FR 2 657 925 A1 ist ein Befestigungsmittel für eine hohle Sandwichplatte bekannt, welche zwei parallele Außenschichten hat. Das Befestigungsmittel wird in den die Außenschichten separierenden und durch zwei Öffnungen geöffneten Hohlraum eingesetzt.

Aus der DE 20 2008 013 013 611 U1 ist ein Spreizdübel mit einem mit einer Bohrung versehenen Gehäuse bekannt. Hierbei verjüngt sich die Bohrung in einem von der Spreizzunge zumindest teilweise überdeckten Teilbereich zur Einführöffnung hin.

Aus der EP 0 400 388 A2 ist ein Möbelverbinder für den Wohnwagenbau bekannt. Aus der US 4,089,614 A ist ein Verbinder für den Möbelbau bekannt.

Es ist Aufgabe der Erfindung, einen Leichtbaudübel, eine Baugruppe zur Herstellung eines Möbels, einen Verbindungsbeschlag, eine weitere Baugruppe zur Herstellung eines Möbels sowie einen Bausatz zur Herstellung eines Möbels vorzuschlagen, durch welchen bzw. durch welche ein Möbel von erhöhter Stabilität herstellbar ist.

Diese Aufgabe wird ausgehend von den Merkmalen des Oberbegriffs des Anspruchs 1 bzw. 4 bzw. 6 bzw. 8 bzw. 10 durch die kennzeichnenden Merkmale des Anspruchs 1 bzw. 4 bzw. 6 bzw. 8bzw. 10 gelöst. In den Unteransprüchen sind vorteilhafte und zweckmäßige Weiterbildungen angegeben.

Bei einem Leichtbaudübel, welcher wenigstens zwei Spreizflügel und einen Spreizflügelsockel umfasst, ist es erfindungsgemäß vorgesehen, die Spreizflügel jeweils mit einem unteren, einem Kopf des Leichtbaudübels fernen Ende mit dem Spreizflügelsockel zu verbinden, wobei der Spreizflügelsockel in Richtung einer Längsachse des Leichtbaudübels gemessen eine Höhe aufweist, welche maximal einem Drittel eines äußeren Durchmessers des Spreizflügelsockels entspricht. Hierdurch wird ein Leichtbaudübel geschaffen, dessen Spreizflügel eine hohe Flexibilität aufweisen und so optimal geeignet sind, eine belastbare Verbindung zwischen einer Sandwichplatte, in welcher der Leichtbaudübel verbaut ist, und dem Leichtbaudübel herzustellen.

Weiterhin ist es vorgesehen, zwischen den Spreizflügeln einen sich in Richtung des Spreizflügelsockels verjüngenden Schraubkanal auszubilden, wobei der Schraubkanal derart bemessen ist, dass die Spreizflügel durch das Einschrauben einer Schraube in einem Kopfbereich des Leichtbaudübels radial nach außen gedrückt werden und dass der Leichtbaudübel wenigstens drei und insbesondere wenigsten vier Spreizflügel umfasst. Hierdurch erfolgt eine Stabilität erzeugende Verspannung zwischen dem Leichtbaudübel und der Sandwichplatte, wobei durch die Ausbildung des Leichtbaudübels mit wenigstens drei und insbesondere wenigstens vier Spreizflügeln eine Druckverteilung vom Leichtbaudübel auf die Sandwichplatte insbesondere in radialer Richtung verbessert ist.

Hierbei ist es vorgesehen, den Spreizflügelsockel in der Form eines Rings oder einer Scheibe auszubilden. Bei einer Ausbildung als Ring ist Freiraum für eine in den Leichtbaudübel eingeschraubte Schraube geschaffen, so dass diese den Leichtbaudübel auch im Bereich seines Bodens stabilisieren kann.

Bei einer Ausbildung als Scheibe ist ein Anschlag für die einzuschraubende Schraube geschaffen, so dass bei einer versehentlichen Verwendung einer zu langen Schraube eine Beschädigung der Sandwichplatte vermieden ist.

Weiterhin ist es auch vorgesehen, dass jeder Spreizflügel an seiner Außenseite einen stufenförmigen Absatz umfasst, durch welchen jeweils eine Anlagefläche gebildet ist, wobei die Anlageflächen dieser Absätze derart orientiert sind, dass diese in einer Ebene liegen, welche von einer Längsachse des Leichtbaudübels senkrecht durchstoßen wird. Hierdurch ist bei eingeschraubter Schraube eine zugfeste Verankerung des Leichtbaudübels in der Sandwichplatte gewährleistet.

Erfindungsgemäß ist es bezüglich einer ersten Baugruppe zur Herstellung eines Möbels, insbesondere eines Fahrzeugeinbaus, welches eine Sandwichplatte, wenigstens einen Leichtbaudübel nach Anspruch 1 und 4 und pro Leichtbaudübel eine Schraube umfasst, vorgesehen, dass die Sandwichplatte eine obere Decklage, eine untere Decklage und eine zwischen den Decklagen angeordnete Mittellage umfasst, wobei die Sandwichplatte für jeden Leichtbaudübel eine Bohrung umfasst, welche die obere Decklage durchdringt und wenigstens in die Mittellage hineinreicht, wobei der in die Bohrung der Sandwichplatte eingedrückte Leichtbaudübel bei in den Leichtbaudübel eingeschraubter Schraube mit durch die eingeschraubte Schraube aufgebautem Druck mit jedem Spreizflügel mit der Anlagefläche des Absatzes flächig an einer Unterseite der oberen Decklage anliegt und mit einer unteren Stirnseite, welche sich von der Anlagefläche des Absatzes in Richtung des Spreizflügelsockels erstreckt, unter Verformung der Mittellage an der Mittellage anliegt sowie mit einer oberen Stirnseite, welche sich von der Anlagefläche des Absatzes von dem Spreizflügelsockel weg erstreckt, flächig an einer durch die Bohrung gebildeten Bohrlochwandung der oberen Decklage anliegt. Hierdurch ist ein sicherer Halt der Schraube in der Sandwichplatte mittels des Leichtbaudübels gewährleistet.

Weiterhin ist es bezüglich der ersten Baugruppe vorgesehen, dass jeder Spreizflügel eine sich an die obere Stirnseite anschließende Deckfläche umfasst, wobei die Deckfläche jedes Spreizflügels bei in den Leichtbaudübel eingeschraubter Schraube mit einer Oberseite der oberen Decklage in einer gemeinsamen Ebene liegt. Hierdurch ist es möglich, eine weitere Baugruppe im Bereich des Leichtbaudübels maximal anzunähern.

Weiterhin sieht die Erfindung bei einem Topfbeschlag, welcher einen Grundkörper und einen Hals umfasst, bei welchem der Hals mit einer umlaufenden Seitenwandung des Grundkörpers verbunden ist, welcher einen sich zu einer Oberseite des Grundkörpers öffnenden, wannenartigen Aufnahmeraum und einen Kanal umfasst, welcher von einem stirnseitigen Ende des Halses in den Aufnahmeraum führt, erfindungsgemäß vor, beidseits des Halses an der umlaufenden Seitenwandung ein linker Absatz und ein rechter Absatz auszubilden, wobei jeder Absatz eine obere Seitenfläche, welche in die Oberseite des Grundkörpers übergeht, und eine untere Seitenfläche, welche in eine Unterseite der Grundkörpers übergeht, umfasst und wobei die obere Seitenfläche gegenüber der unteren Seitenfläche zurückversetzt ist. Durch diese Absätze ist eine optimierte Verbindung des Topfbeschlags mit der Sandwichplatte möglich.

Weiterhin ist es auch vorgesehen, die untere Seitenfläche über eine parallel zu der Oberseite des Grundkörpers verlaufende Anlagefläche in die obere Seitenfläche übergehen zu lassen und insbesondere die obere Seitenfläche mit einer Höhe auszubilden, welche wenigstens einer Dicke einer oberen Decklage einer Sandwichplatte entspricht, in welcher der Topfbeschlag zum Einbau vorgesehen ist. Hierdurch ist der Topfbeschlag dazu geeignet, sich in einer Ausnehmung seitlich und von unten an eine obere Decklage einer Sandwichplatte anzulegen und hierdurch einen Formschluss mit dieser einzugehen.

Eine erfindungsgemäße, zweite Baugruppe zur Herstellung eines Möbels umfasst eine Sandwichplatte und wenigstens einen Verbindungdbeschlag nach Anspruch 6, wobei die Sandwichplatte eine obere Decklage, eine untere Decklage und eine zwischen den Decklagen angeordnete Mittellage umfasst, wobei die Sandwichplatte für jeden Topfbeschlag eine Ausnehmung umfasst, welche die obere Decklage durchdringt und wenigstens in die Mittellage hineinreicht, wobei der Topfbeschlag in der Ausnehmung aufgenommen ist, wobei der Topfbeschlag mit seiner oberen Seitenfläche an der oberen Decklage anliegt und wobei der Topfbeschlag mit seiner unteren Seitenfläche unter Verformung der Mittellage an der Mittellage anliegt. Hierdurch ist eine formschlüssige Verbindung zwischen dem Topfbeschlag und der Sandwichplatte möglich, so dass deren Verbindung verbessert ist.

Bei einem erfindungsgemäßen Verbindungsbeschlag, welcher einen Leichtbaudübel nach Anspruch 1 und einen genannten Topfbeschlag und eine Schraube umfasst, ist der Topfbeschlag mittels der Schraube an dem Leichtbaudübel befestigt. Hierdurch ist eine optimale Verbindung zwischen dem Leichtbaudübel und dem Topfbeschlag hergestellt.

Schließlich umfasst ein erfindungsgemäßer Bausatz zur Herstellung eines Möbels wenigste eine erste Baugruppe nach Anspruch 4 und wenigstens eine zweite Baugruppe nach Anspruch 8, wobei die Sandwichplatten der beiden Baugruppen derart aufeinander ausgerichtete sind, dass der wenigstens eine Topfbeschlag mit einem in dem Hals ausgebildeten Kanal auf den wenigstens einen Leichtbaudübel ausgerichtet ist und dass die Schraube durch den Kanal des Topfbeschlags hindurch in den Leichtbaudübel eingeschraubt ist. Mit einem derartigen Bausatz sind Sandwichplatten-Möbel erhöhter Stabilität herstellbar.

Weitere Einzelheiten der Erfindung werden in der Zeichnung anhand von schematisch dargestellten Ausführungsbeispielen beschrieben.

Hierbei zeigt:
- Fig. 1: eine perspektivische Ansicht eines Leichtbaudübels,
- Fig. 2: eine Draufsicht auf den in der Fig. 1 gezeigten Leichtbaudübel,
- Fig. 3: eine Seitenansicht des in der Fig. 2 gezeigten Leichtbaudübels in Pfeilrichtung III,
- Fig. 4: eine Schnittansicht des in der Fig. 2 gezeigten Leichtbaudübels entsprechend einem Schnitt IV-IV,
- Fig. 5a: eine Schnittdarstellung einer ersten Sandwichplatte mit einer Bohrung, in welche der in den Fig. 1 bis 4 gezeigte Leichtbaudübel eingesetzt ist,
- Fig. 5b: die Darstellung der Fig. 5a, wobei eine Schraube etwa zur Hälfte in den Leichtbaudübel eingeschraubt ist,
- Fig. 5c: die Darstellung der Fig. 5c, wobei eine Schraube etwa vollständig in den Leichtbaudübel eingeschraubt ist,
- Fig. 6: eine perspektivische Darstellung eines Topfbeschlags,
- Fig. 7a: eine Draufsicht auf eine zweite Sandwichplatte mit einer Ausnehmung, in welche der in der Fig. 6 gezeigte Topfbeschlag eingesetzt ist,
- Fig. 7b: eine weitere Draufsicht auf die zweite Sandwichplatte, wobei der Topfbeschlag nun formschlüssig mit der Sandwichplatte verbunden ist,
- Fig. 8: eine der Fig. 7b entsprechende Ansicht, wobei die erste Sandwichplatte in Draufsicht gezeigt ist und
- Fig. 9: eine weitegehend der Fig. 8 entsprechende Ansicht, wobei die erste Sandwichplatte geschnitten dargestellt ist.

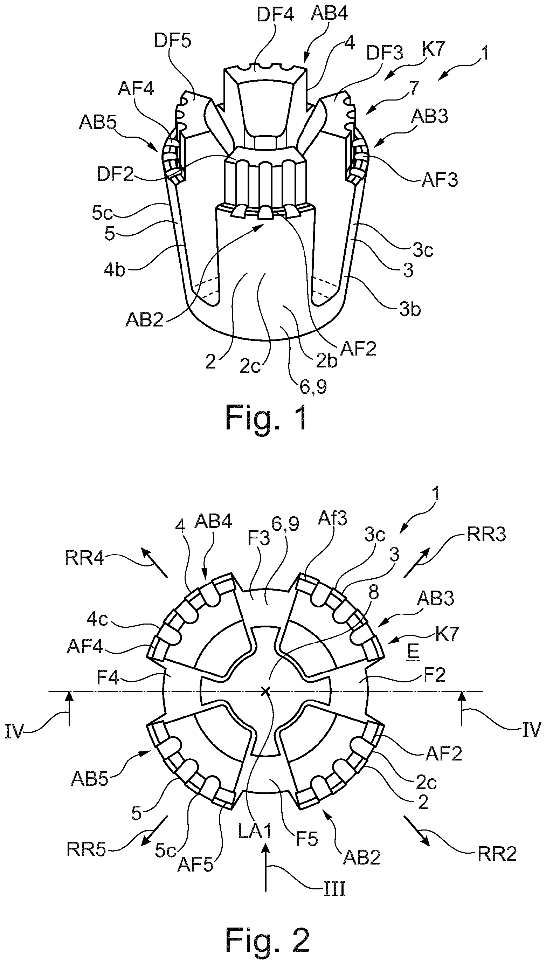

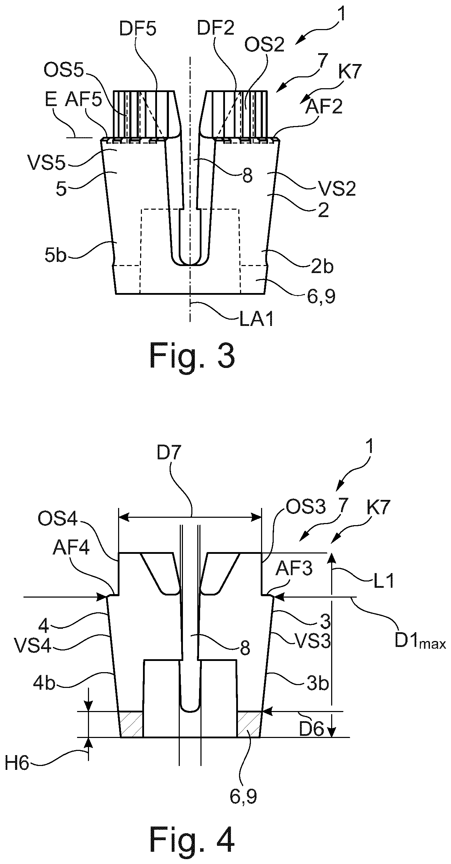

In den Fig. 1 bis 4 ist ein erfindungsgemäßer Leichtbaudübel 1 in verschiedenen Ansichten gezeigt. Die Fig. 1 zeigt den Leichtbaudübel in einer perspektivischen Ansicht. Die Fig. 2 zeigt eine Draufsicht auf den Leichtbaudübel. Die Fig. 3 zeigt eine Seitenansicht des Leichtbaudübels in Pfeilrichtung III und die Fig. 4 zeigt eine Schnittansicht des Leichtbaudübels entsprechend der Schnittlinie IV-IV.

Der Leichtbaudübel 1 umfassend vier Spreizflügel 2, 3, 4, 5 und einen Spreizflügelsockel 6. Die Spreizflügel 2, 3, 4, 5 sind jeweils mit einem unteren Ende 2b, 3b, 4b, 5b, welches einem Kopf 7 des Leichtbaudübels 1 fern ist, mit dem Spreizflügelsockel 6 verbunden. Hierbei weist der Spreizflügelsockel 6 in Richtung einer Längsachse LA1 des Leichtbaudübels 1 gemessen eine Höhe H6 auf, welche maximal einem Drittel eines äußeren Durchmessers D6 des Spreizflügelsockels 6 entspricht.

Entsprechend einer Ausführungsvariante ist der Leichtbaudübel 1 derart bemessen, dass der Spreizflügelsockel eine Höhe H6 von etwa 1,7 mm und einen Durchmesser D6 von etwa 8,3 mm aufweist. Hierbei weist der Leichtbaudübel 1 eine Länge L1 von etwa 11,9 mm auf.

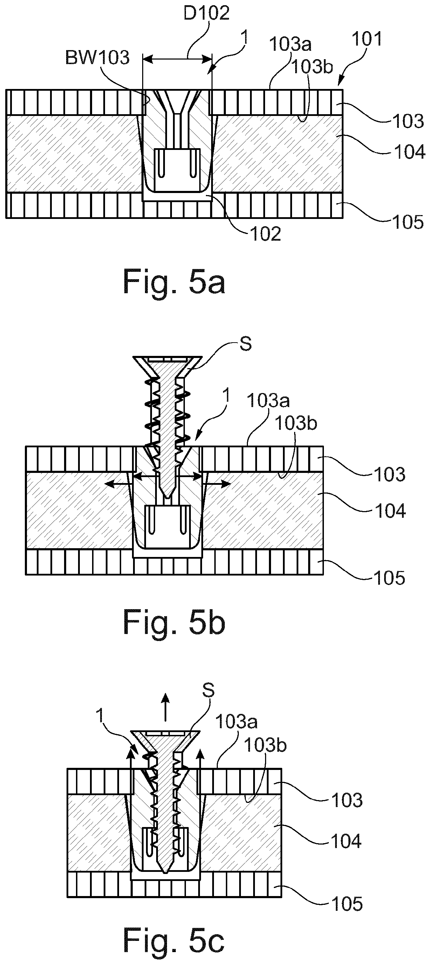

Zwischen den vier Spreizflügeln 2, 3, 4, 5 ist ein sich von dem Kopf 7 in Richtung des Spreizflügelsockels 6 verjüngender Schraubkanal 8 ausgebildet. Der Schraubkanal 8 ist derart bemessen, dass die Spreizflügel 2, 3, 4, 5 durch das Einschrauben einer Schraube S (siehe Fig. 5b und 5c) in einem Kopfbereich K7 des Leichtbaudübels 1 radial nach außen in Richtungen RR2, RR3, RR4, RR5 gedrückt werden. Hierzu wird insbesondere auf die Fig. 2 und die Fig. 5a bis 5c verwiesen.

Die Fig. 5a zeigt nochmals den aus den Fig. 1 bis 4 bekannten Leichtbaudübel 1, wobei der Leichtbaudübel 1 in der Fig. 5a in einer dreilagigen Sandwichplatte 101 aufgenommen ist. Zur Aufnahme des Leichtbaudübels 1 umfasst die Sandwichplatte 101 eine zylindrische Bohrung 102, welche durch eine obere Decklage 103 und eine Mittellage 104 bis an eine untere Decklage 105 geführt ist.

Der Spreizflügelsockel 6 ist als Ring 9 ausgebildet, so dass die Schraube S ungebremst vom dem Spreizflügelsockel 6 in den Leichtbaudübel 1 eingeschraubt werden kann. Alternativ ist es auch vorgesehen, den Spreizflügelsockel als Scheibe auszubilden.

Jeder der Spreizflügel 2, 3, 4, 5 umfasst an seiner Außenseite 2c, 3c, 4c, 5c einen stufenförmigen Absatz AB2, AB3, AB4 ,AB5, durch welchen jeweils eine Anlagefläche AF2, AF3, AF4, AF5 gebildet ist, wobei die Anlageflächen AF2, AF3, AF4, AF5 dieser Absätze AB2, AB3, AB4, AB5 derart orientiert sind, dass diese in einer Ebene E liegen, welche von der Längsachse LA1 des Leichtbaudübels 1 senkrecht durchstoßen wird.

Zwischen den Spreizflügeln 2, 3 und 3, 4 und 4, 5 und 5, 2 ist jeweils ein Freiraum F2, F3, F4, F5 ausgebildet, welcher es ermöglicht, dass die Spreizflügel 2, 3, 4, 5 entgegen der radialen Richtung RR2, RR3, RR4 und RR5 zu der Längsachse LA1 hin zusammengedrückt werden können, so dass ein durch gegenüberliegende Absätze AB2, AB3, AB4 und AB5 definierter maximaler Durchmesser D1 max des Leichtbaudübels 1 durch ein entsprechendes Zusammendrücken der Spreizflügel 2, 3, 4, 5 derart weit zusammengedrückt werden kann, dass dieser in die Bohrung 102 eingedrückt werden kann. Hierbei weist die Bohrung 102 einen Durchmesser D102 auf, welcher etwas größer ist als ein Durchmesser D7, welchen der Leichtbaudübel 1 in seinem Kopfbereich K7 oberhalb der Absätze AB2, AB3, AB4, AB5 aufweist.

Entsprechend lässt sich der Leichtbaudübel 1 in die Bohrung 102 der Sandwichplatte 101 bei vorübergehender elastischer Verformung seiner Spreizflügel 2, 3, 4, 5 einstecken, so dass dieser dann in der Bohrung 102 aufgenommen ist, wie dies die Fig. 5a zeigt.

Aus einer Zusammenschau der Fig. 5a bis 5c ist ersichtlich, wie der in die Bohrung 102 der Sandwichplatte 101 eingedrückte Leichtbaudübel 1 bei in den Leichtbaudübel 1 eingeschraubter Schraube S mit durch die eingeschraubte Schraube S aufgebautem Druck mit jedem seiner Spreizflügel 2, 3, 4, 5 mit der Anlagefläche AF2, AF3, AF4, AF5 des Absatzes AB2, AB3, AB4, AB5 flächig an einer Unterseite 103b der oberen Decklage 103 anliegt und mit einer unteren Stirnseite US2, US3, US4, US5 (vergleiche Fig. 3 und 4), welche sich von der Anlagefläche AF2, AF3, AF4, AF5 des Absatzes AB2, AB3, AB4, AB5 in Richtung des Spreizflügelsockels 6 erstreckt, unter Verformung der Mittellage 104 an der Mittellage 104 anliegt sowie mit einer oberen Stirnseite OS2, OS3, OS4, OS5, welche sich von der Anlagefläche AF2, AF3, AF4, AF5 des Absatzes AB2, AB3, AB4, AB5 von dem Spreizflügelsockel 6 weg nach oben erstreckt, flächig an einer durch die Bohrung 101 gebildeten Bohrlochwandung BW103 der oberen Decklage 103 anliegt.

Weiterhin weist jeder Spreizflügel 2, 3, 4, 5 eine sich an die obere Stirnseite OS2, OS3, OS4, OS5 anschließende Deckfläche DF2, DF3, DF4, DF5 auf. Hierbei liegen die Deckflächen DF2, DF3, DF4, DF5 jedes Spreizflügels 2, 3, 4, 5 bei in den Leichtbaudübel 1 eingeschraubter Schraube S mit einer Oberseite 103a der oberen Decklage 103 in einer gemeinsamen Ebene.

Zur Erhaltung der Übersichtlichkeit ist der Leichtbaudübel 1 nur in den Fig. 1 bis 4 mit weiteren Bezugszeichen versehen und in den Fig. 5a bis 5c ohne weitere Bezugszeichen gezeigt.

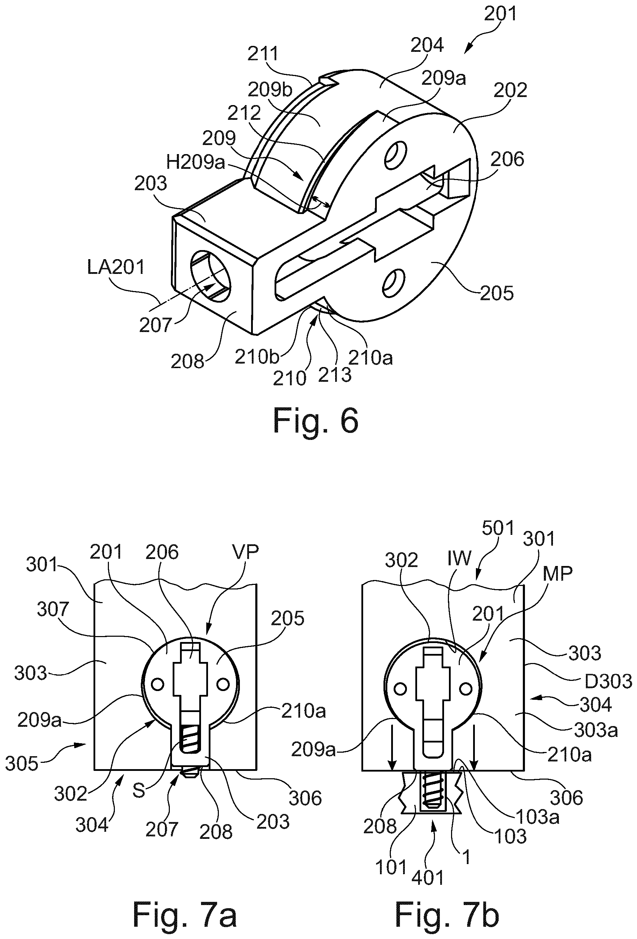

In der Fig. 6 ist in perspektivischer Ansicht ein erfindungsgemäßer Topfbeschlag 201 gezeigt. Der Topfbeschlag 201 umfasst einen Grundkörper 202 und einen Hals 203, wobei der Hals 203 mit einer umlaufenden Seitenwandung 204 des Grundkörpers 202 verbunden ist. Weiterhin umfasst der Topfbeschlag 201 einen sich zu einer Oberseite 205 des Grundkörpers 202 öffnenden, wannenartigen Aufnahmeraum 206 und einen Kanal 207, welcher von einem stirnseitigen Ende 208 des Halses 203 in den Aufnahmeraum 206 führt. Beidseits des Halses 203 umfasst der Topfbeschlag 201 bzw. dessen Grundkörper 202 an der umlaufenden Seitenwandung 204 einen linken Absatz 209 und einen rechten Absatz 210, wobei jeder Absatz 209, 210 eine obere Seitenfläche 209a, 210a umfasst, welche in die Oberseite 205 des Grundkörpers 202 übergeht, und eine untere Seitenfläche 209b, 210b umfasst, welche in eine Unterseite 211 des Grundkörpers 202 übergeht. Hierbei ist die obere Seitenfläche 209a, 210a gegenüber der unteren Seitenfläche 209b, 210b zu einer den Kanal 207 urchlaufenden Längsachse LA201 des Topfbeschlags 201 hin zurückversetzt.

In der Fig. 7a ist in Draufsicht eine zweite Sandwichplatte 301 ausschnittsweise gezeigt, welche eine schlüssellochförmige Ausnehmung 302 aufweist. Hierbei reicht die Ausnehmung 302 durch eine obere Decklage 303 in eine Mittellage 304 der Sandwichplatte 301 und wird nach unten durch eine untere Decklage 305 der Sandwichplatte 301 begrenzt. Die Ausnehmung 302 ist zusätzlich seitlich zu einer Seitenfläche 306 der Sandwichplatte 301 geöffnet. In der Fig. 7a ist die Sandwichplatte 301 mit in die Ausnehmung 302 eingesetztem Topfbeschlag 201 gezeigt. Weiterhin ist eine in ihrer Funktion mit der aus den Fig. 5b und 5c bekannten Schraube vergleichbare Schraube S dargestellt, welche von dem Aufnahmeraum 206 aus in den Kanal 207 eingeschoben ist und aus dem Hals 203 leicht heraussteht.

Aus der Darstellung der Fig. 7a ist ersichtlich wie der Topfbeschlag 201 mit seinen oberen Seitenflächen 209a, 210a gegenüber einer Kontur 307, welche die obere Decklage 303 zu der Ausnehmung 302 hin bildet, zurückversetzt ist, wenn dieser in die Ausnehmung 302 der zweiten Sandwichplatte 301 eingesetzt wird. In dieser vormontierten Position VP des Topfbeschlags 201 schließt die Oberseite 205 des Topfbeschlags 201 bündig mit der oberen Decklage 303 der Sandwichplatte 301 ab. Weiterhin ist in dieser vormontierten Position VP das stirnseitige Ende 208 des Halses 203 des Topfbeschlags 201 gegenüber der Seitenfläche 306 der Sandwichplatte 301 zurückversetzt angeordnet.

Aus einer vergleichenden Betrachtung der Fig. 7a und 7b ist nun ersichtlich, wie der Topfbeschlag 201 von der Schraube S nach dem Einschrauben der Schaube S in den aus den Fig. 1 bis 4 bekannten und in der ersten Sandwichplatte 101 fixierten Leichtbaudübel 1 an die erste Sandwichplatte 101 herangezogen ist. In der Fig. 7b sind die erste Sandwichplatte 101 und der Leichtbaudübel 1 nur schematisch dargestellt. In der Fig. 7b ist der Topfbeschlag 201 in die sich an der ersten Sandwichplatte 101 abstützende zweite Sandwichplatte 301 derart eingepresst, dass der Topfbeschlag 201 mit seinen unteren Seitenflächen 209b, 210b seiner Absätze 209, 210 die Mittellage 304 der Sandwichplatte 301 verformt bis die oberen Seitenflächen 209a, 210a seiner Absätze 209, 210 an der oberen Decklage 303, nämlich an einer durch die obere Decklage 303 gebildeten Innenwandung IW der Ausnehmung 302 anliegen. In dieser montierten Position MP des Topfbeschlags 201 gehen dann das stirnseitige Ende 208 des Topfbeschlags 201 und die Seitenfläche 306 der zweiten Sandwichplatte 301 bündig ineinander über.

Eine obere Decklage 103 der ersten Sandwichplatte 101 ist senkrecht zu der oberen Decklage 303 der zweiten Sandwichplatte 301 orientiert, so dass die zweite Sandwichplatte 301 mit ihrer Seitenfläche 306 flächig an der Oberseite 103a der oberen Decklage 103 der ersten Sandwichplatte 101 anliegt.

Aus der Fig. 6, welche den Topfbeschlag 201 in perspektivischer Ansicht zeigt, ist ersichtlich, dass dessen untere Seitenflächen 209b, 210b jeweils über eine parallel zu der Oberseite 205 des Grundkörpers 202 verlaufende Anlagefläche 212, 213 in die oberen Seitenflächen 209a, 210a übergehen. Hierbei weisen die oberen Seitenflächen 209a, 210a jeweils eine Höhe H209a auf, welche einer Dicke D303 (siehe Fig. 7b) der oberen Decklage 303 der Sandwichplatte 301 entspricht, in welcher der Topfbeschlag 201 aufgenommen ist. Mit diesen Anlageflächen 212, 213 liegt der Topfbeschlag 201 an einer Unterseite der oberen Decklage 303 an, welche einer Oberseite 303a gegenüber liegt.

Die beiden Sandwichplatten 101 und 301 sind somit durch einen Verbindungsbeschlag 401 zusammengehalten, welcher den Leichtbaudübel 1, den Topfbeschlag 201 und die Schraube S umfasst. Selbstverständlich ist es auch vorgesehen zur Verbindung von zwei Sandwichplatten bei Bedarf zwei und mehr derartige Verbindungsbeschläge zu verwenden.

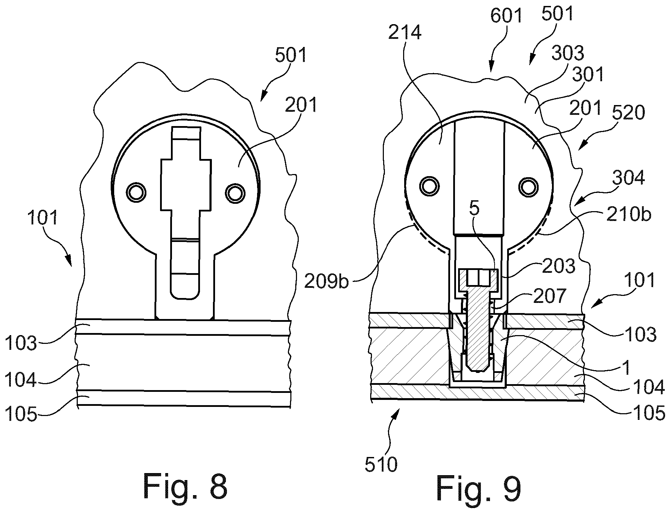

In der Fig. 8 ist nochmals die aus der Fig. 7b bekannte Anordnung gezeigt, wobei im Unterschied zu der Fig. 7b auf eine Darstellung der Schraube verzichtet wurde und wobei die erste Sandwichplatte 101 detaillierter und in der Draufsicht dargestellt ist, so dass deren obere Decklage 103, deren Mittellage 104 und deren untere Decklage 105 sichtbar sind.

In der Fig. 9 ist dann die Anordnung der Fig. 8 bei geschnittener erster Sandwichplatte 101 gezeigt, wobei die erste Sandwichplatte 101 derart geschnitten ist, dass der in die erste Sandwichplatte 101 gedrückte Leichtbaudübel 1 mittig geschnitten ist und wobei der Topfbeschlag 201 im Bereich seines Halses 203 schematisch und teilweise aufgeschnitten dargestellt ist, so dass die Schraube S ebenfalls geschnitten gezeigt ist.

In den Ansichten der Fig. 8 und 9 ist der Topfbeschlag 201 von der Schraube S gegen den Leichtbaudübel 1 gezogen und hiermit sind auch die formschlüssig mit dem Topfbeschlag 201 verbundene zweite Sandwichplatte 301 und die formschlüssig mit dem Leichtbaudübel 1 verbundene erste Sandwichplatte 101 aneinander gezogen, so dass diese in der gezeigten montierten Stellung MP - wie bereits in der Fig. 7b gezeigt - zusammengehalten sind.

In der Fig. 9 ist somit ein Bausatz 501 zur Herstellung eines Möbels 601 gezeigt, wobei der Bausatz 501 wenigste eine erste Baugruppe 510, welche die erste Sandwichplatte 101, den Leichtbaudübel 1 und die Schraube S umfasst, und wenigstens eine zweite Baugruppe 520, welche die zweite Sandwichplatte 301 und den Topfbeschlag 201 umfasst. Hierbei sind Sandwichplatten 101, 301 der beiden Baugruppen 510, 520 derart aufeinander ausgerichtet, dass der wenigstens eine Topfbeschlag 201 mit seinem in dem Hals 203 ausgebildeten Kanal 207 auf den wenigstens einen Leichtbaudübel 1 ausgerichtet ist, wobei die Schraube S durch den Kanal 207 des Topfbeschlags 201 hindurch in den Leichtbaudübel 1 eingeschraubt ist.

Die Fig. 7b, 8, 9 zeigen somit mit unterschiedlichem Fokus alle den montierten Bausatz 501. Der Topfbeschlage 201 umfasst auch eine Abdeckkappe 214. Diese ist nur in der Fig. 9 gezeigt. Durch die Abdeckkappe 214 ist der Aufnahmeraum 206 verschlossen.

In der Fig. 9 sind mit gestrichelten Linien die unteren Seitenflächen 209b und 210b des Topfbeschlags 201 angedeutet, welche unter der oberen Decklage 303 in die Mittellage 304 der zweiten Sandwichplatte 301 eingedrückt sind.

## Patentansprüche

1. Leichtbaudübel umfassend wenigstens drei Spreizflügel (2, 3, 4, 5), insbesondere wenigstens vier Spreizflügel (2, 3, 4, 5), und einen
Spreizflügelsockel (6), wobei die Spreizflügel (2, 3, 4, 5) jeweils mit einem unteren, einem Kopf (7) des Leichtbaudübels (1) fernen Ende (2b, 3b, 4b, 5b) mit dem Spreizflügelsockel (6) verbunden sind, wobei der Spreizflügelsockel (6) in Richtung einer Längsachse (LA1) des Leichtbaudübels (1) gemessen eine Höhe (H6) aufweist, welche maximal einem Drittel eines äußeren Durchmessers (D6) des Spreizflügelsockels (6) entspricht,
**dadurch gekennzeichnet,**
**dass** zwischen den Spreizflügeln (2, 3, 4, 5) ein sich in Richtung des Spreizflügelsockels (6) verjüngender Schraubkanal (8) ausgebildet ist, wobei der Schraubkanal (8) derart bemessen ist, dass die Spreizflügel (2, 3, 4, 5) durch das Einschrauben einer Schraube (S) in einem Kopfbereich (K7) des Leichtbaudübels (1) radial nach außen gedrückt werden und dass der Leichtbaudübel (1) wenigstens drei und insbesondere wenigsten vier Spreizflügel (2, 3, 4, 5) umfasst.

2. Leichtbaudübel nach Anspruch 1,
**dadurch gekennzeichnet,**
**dass** der Spreizflügelsockel (6) als Ring (9) oder als Scheibe ausgebildet ist.

3. Leichtbaudübel nach Anspruch 1 oder 2,
**dadurch gekennzeichnet,**
**dass** jeder Spreizflügel (2, 3, 4, 5) an seiner Außenseite (2c, 3c, 4c, 5c) einen stufenförmigen Absatz (AB2 - AB5) umfasst, durch welchen jeweils eine Anlagefläche (AF2 - AF5) gebildet ist, wobei die Anlageflächen (AF2 - AF5) dieser Absätze (AB2 - AB5) derart orientiert sind, dass diese in einer Ebene (E) liegen, welche von einer Längsachse (LA1) des Leichtbaudübels (1) senkrecht durchstoßen wird.

4. Baugruppe (510) zur Herstellung eines Möbels (601), insbesondere eines Fahrzeugeinbaus, umfassend eine Sandwichplatte (101), wenigstens einen Leichtbaudübel (1) nach Anspruch 1 und 3 und pro Leichtbaudübel (1) eine Schraube (S),
- wobei die Sandwichplatte (101) eine obere Decklage (103), eine untere Decklage (105) und eine zwischen den Decklagen (103, 105) angeordnete Mittellage (104) umfasst,
- wobei die Sandwichplatte (101) für jeden Leichtbaudübel (1) eine Bohrung (102) umfasst, welche die obere Decklage (103) durchdringt und wenigstens in die Mittellage (104) hineinreicht,
- wobei der in die Bohrung (102) der Sandwichplatte (101) eingedrückte Leichtbaudübel (1) bei in den Leichtbaudübel (1) eingeschraubter Schraube (S) mit durch die eingeschraubte Schraube (S) aufgebautem Druck
∘ mit jedem Spreizflügel (2, 3, 4, 5) mit der Anlagefläche (AF2 - AF5) des Absatzes (AB2 - AB5) flächig an einer Unterseite (103b) der oberen Decklage (103) anliegt und
∘ mit einer unteren Stirnseite (US2 - US5), welche sich von der Anlagefläche (AF2 - AF5) des Absatzes (AB2 - AB5) in Richtung des Spreizflügelsockels (6) erstreckt, unter Verformung der Mittellage (104) an der Mittellage (104) anliegt sowie
∘ mit einer oberen Stirnseite (OS2 - OS5), welche sich von der Anlagefläche (Af2 - AF5) des Absatzes (AB2 - AB5) von dem Spreizflügelsockel (6) weg erstreckt, flächig an einer durch die Bohrung (102) gebildeten Bohrlochwandung (BW103) der oberen Decklage (103) anliegt.

5. Baugruppe nach Anspruch 4,
**dadurch gekennzeichnet,**
**dass** jeder Spreizflügel (2, 3, 4, 5) eine sich an die obere Stirnseite (OS2 - OS5) anschließende Deckfläche (DF2 - DF4) umfasst, wobei die Deckfläche (DF2 - DF4) jedes Spreizflügels (2, 3, 4, 5) bei in den Leichtbaudübel (1) eingeschraubter Schraube (S) mit einer Oberseite (103a) der oberen Decklage (103) in einer gemeinsamen Ebene liegt.

6. Verbindungsbeschlag,
**dadurch gekennzeichnet,**
**dass** dieser einen Leichtbaudübel (1) nach Anspruch 1, einen Topfbeschlag (201) und eine Schraube (S) umfasst, wobei der Topfbeschlag (201) mittels der Schraube (S) an dem Leichtbaudübel (1) befestigt ist, wobei der Topfbeschlag (201) einen Grundkörper (202) und einen Hals (203) umfasst, wobei der Hals (203) mit einer umlaufenden Seitenwandung (204) des Grundkörpers (202) verbunden ist und wobei der Topfbeschlag (201) einen sich zu einer Oberseite (205) des Grundkörpers (201) öffnenden, wannenartigen Aufnahmeraum (206) umfasst, wobei der Topfbeschlag (201) einen Kanal (207) umfasst, welcher von einem stirnseitigen Ende (208) des Halses (203) in den Aufnahmeraum (206) führt, wobei beidseits des Halses (203) an der umlaufenden Seitenwandung (204) ein linker Absatz (209) und ein rechter Absatz (210) ausgebildet ist, wobei jeder Absatz (209, 210) eine obere Seitenfläche (209a, 210a), welche in die Oberseite (205) des Grundkörpers (202) übergeht, und eine untere Seitenfläche (209b, 210b), welche in eine Unterseite (211) der Grundkörpers (202) übergeht, umfasst und wobei die obere Seitenfläche (209a, 210a) gegenüber der unteren Seitenfläche (209b, 210b) zurückversetzt ist.

7. Verbindungsbeschlag nach Anspruch 6,
**dadurch gekennzeichnet,**
**dass** die untere Seitenfläche (209b, 210b) über eine parallel zu der Oberseite (205) des Grundkörpers (202) verlaufende Anlagefläche (212, 213) in die obere Seitenfläche (209a, 210a) übergeht und dass es insbesondere vorgesehen ist, dass die obere Seitenfläche (209a, 210a) eine Höhe (H209a) aufweist, welche wenigstens einer Dicke (D303) einer oberen Decklage (303) einer Sandwichplatte (301) entspricht, in welcher der Topfbeschlag (201) zum Einbau vorgesehen ist.

8. Baugruppe (520) zur Herstellung eines Möbels (601), insbesondere eines Fahrzeugeinbaus, umfassend eine Sandwichplatte (301) und wenigstens einen Verbindungsbeschlag (401) nach Anspruch 6,
- wobei die Sandwichplatte (301) eine obere Decklage (303), eine untere Decklage (305) und eine zwischen den Decklagen (303, 305) angeordnete Mittellage (304) umfasst,
- wobei die Sandwichplatte (301) für jeden Topfbeschlag (201) eine Ausnehmung (302) umfasst, welche die obere Decklage (303) durchdringt und wenigstens in die Mittellage (304) hineinreicht,
- wobei der Topfbeschlag (201) in der Ausnehmung (302) aufgenommen ist,
- wobei der Topfbeschlag (201) mit seiner oberen Seitenfläche (209a, 210a) an der oberen Decklage (303) anliegt und wobei der Topfbeschlag (201) mit seiner unteren Seitenfläche (209b, 210b) unter Verformung der Mittellage (304) an der Mittellage (304) anliegt.

9. Bausatz (501) zur Herstellung eines Möbels (601), insbesondere eines Fahrzeugeinbaus,
**dadurch gekennzeichnet,**
**dass** der Bausatz (501) wenigstens eine erste Baugruppe (510) nach Anspruch 4 und wenigstens eine zweite Baugruppe (520) nach Anspruch 8 umfasst, wobei die Sandwichplatten (101; 301) der beiden Baugruppen (510; 520) derart aufeinander ausgerichtete sind, dass der wenigstens eine Topfbeschlag (201) mit einem in dem Hals (203) ausgebildeten Kanal (207) auf den wenigstens einen Leichtbaudübel (1) ausgerichtet ist und dass die Schraube (S) durch den Kanal (207) des Topfbeschlags (201) hindurch in den Leichtbaudübel (1) eingeschraubt ist.

## Claims

1. Lightweight dowel comprising at least three resilient flanks (2, 3, 4, 5), in particular at least four resilient flanks (2, 3, 4, 5), and one
resilient flank base (6), wherein the resilient flanks (2, 3, 4, 5) are each connected to the resilient flank base (6) by a lower end (2b, 3b, 4b, 5b) remote from a head (7) of the Lightweight dowel (I), wherein the resilient flank base (6) has a height (H6), measured in the direction of a longitudinal axis (LAI) of the Lightweight dowel (I), which corresponds to a maximum of one third of an outer diameter (D6) of the resilient flank base (6),
**characterised in that**
a screw channel (8) is formed between the resilient flanks (2, 3, 4, 5) which tapers in the direction of the resilient flank base (6), the screw channel (8) being dimensioned such that the resilient flanks (2, 3, 4, 5) can be pressed radially outwards by screwing in a screw (S) into a head area (K7) of the lightweight dowel, and that the lightweight dowel (I) comprises at least three and in particular at least four resilient flanks (2, 3, 4, 5).

2. Lightweight dowel according to claim 1,
**characterised in that**,
that the resilient flank base (6) is designed as a ring (9) or as a disc.

3. Lightweight dowel according to claim 1 or 2,
**characterised in that**
that each resilient flank (2, 3, 4, 5) comprises a step-shaped shoulder (AB2 -AB5) on its outer side (2c, 3c, 4c, 5c), through which a respective contact area (AF2 - AF5) is formed, wherein the contact areas (AF2 - AF5) of these two sections (AB2 - AB5) are orientated in such a way that they lie in a plane (E) which is penetrated vertically by a longitudinal axis (LAI) of the lightweight dowel (1).

4. Assembly (510) for the manufacture of a piece of furniture (601), in particular a vehicle installation, comprising a sandwich panel (101), at least one lightweight dowel (1) according to claims 1 and 3 and one screw (S) per lightweight dowel (1),
- wherein the sandwich panel (101) comprises an upper top layer (103), a lower top layer (105) and a centre layer (104) arranged between the top layers (103, 105),
- wherein the sandwich panel (101) has a bore (102) for each lightweight dowel (1), which penetrates the top layer (103) and extends at least into the centre layer (104),
- wherein, when the lightweight dowel (1) is pressed into the bore (102) of the sandwich panel (101) with the screw screwed into the lightweight dowel (1) with pressure built up by the screwed-in screw (S),
∘ each resilient flank (2, 3, 4, 5) of the lightweight dowel abuts flat against an underside 103b) of the top layer (103) with the contact area (AF2 - AF5) of the shoulder (AB2 - AB5), and
∘ a lower front side (US2 - US5) of the lightweight dowel, which extends from the contact area (AF2 - AF5) of the heel (AB2 - AB5) in the direction of the resilient flank base (6), abuts against the centre layer (104) under deformation of the centre layer (104), and
∘ an upper front side (OS2 - OS5) of the lightweight dowel, which extends from the contact area (Af2 - AF5) of the shoulder (AB2 - AB5) away from the resilient flank base (6), abuts flat against a surface formed by the hole (102) of the side wall (BW103) of the top layer (103).

5. Assembly according to claim 4,
**characterised in that,**
each resilient flank (2, 3, 4, 5) comprises a top surface (DF2 - DF4) adjoining the upper front side (OS2 - OS5), wherein the top surface (DF2 - DF4) of each resilient flank (2, 3, 4, 5) lies in a common plane with a top side (103a) of the upper top layer (103) when the screw (S) is screwed into the lightweight dowel (1).

6. Connecting fitting,
**characterised in that**
it comprises a Lightweight dowel (1) according to claim 1, a cup fitting (201) and a screw (S), the cup fitting (201) being fixed to the dowel (I) by means of the screw (S), wherein the screw (S) is attached to the lightweight dowel (1), whereby the cup fitting (201) comprises a base body (202) and a neck (203), wherein the neck (203) is connected to a circumferential side wall (204) of the base body (202) and wherein the cup fitting (201) has a side wall (204) extending towards an upper side (205) of the base body (202), wherein the cup fitting (201) comprises a channel (207) which leads from a front side end (208) of the neck (203) into the receiving space (206), wherein a left shoulder (209) and a right shoulder (210) are formed on both sides of the neck (203) on the circumferential side wall (204), wherein each shoulder (209, 210) has an upper side (209a, 210a) which extends into the upper side (206) of the neck (203) of the base body (202), and a lower side surface (209b, 210b), which merges into a lower side (211) of the base body (202), and wherein the upper side surface (209a, 210a) is set back relative to the lower side surface (209b, 210b).

7. Connecting fitting according to claim 6,
**characterised in that**
the lower side (209b, 210b) has a side parallel to the upper side (205) of the base body (202) merges into the upper side area (209a, 210a) and that it is provided in particular that the upper side area (209a, 210a) has a height (H209a) which corresponds to at least one thickness (D303) of a top layer (303) of a sandwich panel (202) in which the cup fitting (201) is intended to be installed.

8. Assembly (520) for manufacturing a piece of furniture (601), in particular a vehicle installation comprising a sandwich panel (301) and at least one connecting fitting (401) according to claim 6,
- wherein the sandwich panel (301) comprises an upper top layer (303), a lower top layer (305) and a centre layer (304) arranged between the top layers (303, 305),
- wherein the sandwich panel (301) comprises a recess (302) for each cup fitting (201), which recess penetrates the top layer (303) and extends at least into the centre layer (304),
- wherein the cup fitting (201) is received in the recess (302),
- wherein the cup fitting (201) has its upper side (209a, 210a) attached to the top layer (303) and wherein the cup fitting (201) is in contact with its lower side (209b, 210b) with deformation of the centre position (304) is in contact with the centre position (304).

9. Assembly kit for the manufacture of a piece of furniture (601), in particular a vehicle installation,
**characterised in that**
the assembly kit (501) comprises at least one first assembly (510) according to claim 4 and at least one second assembly (520) according to claim 8, wherein the sandwich panels (101; 301) of the two assemblies (510; 520) are arranged one on top of the other in such a way that the sandwich panels (101; 301) of the two assemblies (510; 520) are arranged one on top of the other and that the at least one cup fitting (201) with a channel (207) formed in the neck (203) is aligned with the at least one lightweight dowel (1) and that the screw (S) is inserted through the channel (207) of the cup fitting (201) through into the lightweight dowel (1).

## Revendications

1. Goujon pour construction légère, comprenant au moins trois ailettes d'écartement (2, 3, 4, 5), en particulier au moins quatre ailettes d'écartement (2, 3, 4, 5), et un socle à ailettes d'écartement (6),
dans lequel
les ailettes d'écartement (2, 3, 4, 5) sont reliées au socle à ailettes d'écartement (6), chacune par une extrémité inférieure (2b, 3b, 4b, 5b) éloignée d'une tête (7) du goujon pour construction légère (1),
le socle à ailettes d'écartement (6) présente une hauteur (H6), mesurée dans la direction d'un axe longitudinal (LA1) du goujon pour construction légère (1), laquelle correspond au maximum à un tiers d'un diamètre extérieur (D6) du socle à ailettes d'écartement (6),
**caractérisé en ce que**
un canal de vissage (8) se rétrécissant en direction du socle à ailettes d'écartement (6) est formé entre les ailettes d'écartement (2, 3, 4, 5), le canal de vissage (8) étant dimensionné de telle sorte que les ailettes d'écartement (2, 3, 4, 5) sont pressées radialement vers l'extérieur par l'insertion d'une vis (S) dans une zone de tête (K7) du goujon pour construction légère (1), et **en ce que** le goujon pour construction légère (1) comprend au moins trois et en particulier au moins quatre ailettes d'écartement (2, 3, 4, 5).

2. Goujon pour construction légère selon la revendication 1,
**caractérisé en ce que**
le socle à ailettes d'écartement (6) est conçu comme un anneau (9) ou comme un disque.

3. Goujon pour construction légère selon la revendication 1 ou 2, **caractérisé en ce que**
chaque ailette d'écartement (2, 3, 4, 5) comprend sur sa face extérieure (2c, 3c, 4c, 5c) un décrochement (AB2 - AB5) en forme de gradin par lequel est formée une surface d'appui respective (AF2 - AF5), les surfaces d'appui (AF2 - AF5) desdits décrochements (AB2 - AB5) étant orientées de manière à se trouver dans un plan (E) traversé perpendiculairement par un axe longitudinal (LA1) du goujon pour construction légère (1).

4. Ensemble structurel (510) pour la fabrication d'un meuble (601), en particulier pour aménagement intérieur de véhicule, comprenant un panneau sandwich (101), au moins un goujon pour construction légère (1) selon les revendications 1 et 3 et une vis (S) par goujon pour construction légère (1), dans lequel
- le panneau sandwich (101) comprend une couche de couverture supérieure (103), une couche de couverture inférieure (105) et une couche centrale (104) disposée entre les couches de couverture (103, 105),
- le panneau sandwich (101) comprend pour chaque goujon pour construction légère (1) un perçage (102) qui traverse la couche de couverture supérieure (103) et s'étend au moins dans la couche centrale (104),
- lorsque la vis (S) est insérée dans le goujon pour construction légère (1), le goujon pour construction légère (1), enfoncé dans le perçage (102) du panneau sandwich (101) et soumis à une pression établie par la vis insérée (S),
∘ s'applique à plat contre une face inférieure (103b) de la couche de couverture supérieure (103), à savoir par chaque ailette d'écartement (2, 3, 4, 5) au moyen de la surface d'appui (AF2 - AF5) du décrochement (AB2 - AB5), et
∘ s'applique contre la couche centrale (104), en déformant la couche centrale (104), à savoir par une face frontale inférieure (US2 - US5) qui s'étend depuis la surface d'appui (AF2 - AF5) du décrochement (AB2 - AB5) en direction du socle à ailettes d'écartement (6), et
∘ s'applique à plat contre une paroi de trou percé (BW103), formée par le perçage (102), de la couche de couverture supérieure (103), à savoir par une face frontale supérieure (OS2 - OS5) qui s'étend depuis la surface d'appui (Af2 - AF5) du décrochement (AB2 - AB5) en s'éloignant du socle à ailettes d'écartement (6).

5. Ensemble structurel selon la revendication 4,
**caractérisé en ce que**
**que** chaque ailette d'écartement (2, 3, 4, 5) présente une surface de couverture (DF2 - DF4) se raccordant à la face frontale supérieure (OS2 - OS5), la surface de couverture (DF2 - DF4) de chaque ailette d'écartement (2, 3, 4, 5) se trouvant dans un plan commun avec une face supérieure (103a) de la couche de couverture supérieure (103) lorsque la vis (S) est insérée dans le goujon pour construction légère (1).

6. Ferrure d'assemblage,
**caractérisée en ce que**
celle-ci comprend un goujon pour construction légère (1) selon la revendication 1, une coupelle de ferrure (201) et une vis (S), la coupelle de ferrure (201) étant fixée au goujon pour construction légère (1) au moyen de la vis, la coupelle de ferrure (201) comprenant un corps de base (202) et un col (203), le col (203) étant relié à une paroi latérale périphérique (204) du corps de base (202), et la coupelle de ferrure (201) comprenant un espace de réception (206) en forme de cuvette s'ouvrant vers une face supérieure (205) du corps de base (201), la coupelle de ferrure (201) présentant un canal (207) qui mène depuis une extrémité frontale (208) du col (203) jusque dans l'espace de réception (206), un décrochement gauche (209) et un décrochement droit (210) étant formés de part et d'autre du col (203) sur la paroi latérale périphérique (204), chaque décrochement (209, 210) présentant une surface latérale supérieure (209a, 210a) qui se raccorde à la face supérieure (205) du corps de base (202), et une surface latérale inférieure (209b, 210b) qui se raccorde à une face inférieure (211) du corps de base (202), et la surface latérale supérieure (209a, 210a) étant en retrait par rapport à la surface latérale inférieure (209b, 210b).

7. Ferrure d'assemblage selon la revendication 6,
**caractérisée en ce que**
la surface latérale inférieure (209b, 210b) se raccorde à la surface latérale supérieure (209a, 210a) par l'intermédiaire d'une surface d'appui (212, 213) s'étendant parallèlement à la face supérieure (205) du corps de base (202), et **en ce qu'**il est en particulier prévu que la surface latérale supérieure (209a, 210a) présente une hauteur (H209a) qui correspond à au moins une épaisseur (D303) d'une couche de couverture supérieure (303) d'un panneau sandwich (301) dans lequel la coupelle de ferrure (201) est prévue pour être montée.

8. Ensemble structurel (520) pour la fabrication d'un meuble (601), en particulier pour aménagement intérieur de véhicule, comprenant un panneau sandwich (301) et au moins une ferrure d'assemblage (401) selon la revendication 6,
dans lequel
- le panneau sandwich (301) comprend une couche de couverture supérieure (303), une couche de couverture inférieure (305) et une couche centrale (304) disposée entre les couches de couverture (303, 305),
- pour chaque coupelle de ferrure (201), le panneau sandwich (301) présente un évidement (302) qui traverse la couche de couverture supérieure (303) et s'étend au moins jusque dans la couche centrale (304),
- la coupelle de ferrure (201) est logée dans l'évidement (302),
- la coupelle de ferrure (201) s'applique par sa surface latérale supérieure (209a, 210a) contre la couche de couverture supérieure (303), et la coupelle de ferrure (201) s'applique par sa surface latérale inférieure (209b, 210b) contre la couche centrale (304) en déformant la couche centrale (304).

9. Kit (501) pour la fabrication d'un meuble (601), en particulier pour aménagement intérieur de véhicule,
**caractérisé en ce que**
le kit (501) comprend au moins un premier ensemble structurel (510) selon la revendication 4 et au moins un deuxième ensemble structurel (520) selon la revendication 8, les panneaux sandwich (101 ; 301) des deux ensembles structurels (510 ; 520) étant alignés l'un sur l'autre de telle sorte que ladite au moins une coupelle de ferrure (201) est alignée, par un canal (207) formé dans le col (203), sur ledit au moins un goujon pour construction légère (1), et que la vis (S) est insérée dans le goujon pour construction légère (1) à travers le canal (207) de la coupelle de ferrure (201).
